# FASCICULE DE BREVET EUROPEEN

(11) **EP 0 683 725 B1**
(45) Date de publication et mention de la délivrance du brevet: **02.06.1999**
(21) Numéro de dépôt: 95903397.8
(22) Date de dépôt: 13.12.1994
(51) Int. Cl.: B32B 27/00, C08J 5/12, F16L 11/04

(54) **ARTICLE MULTICOUCHE COMPRENANT UN ELASTOMERE VULCANISE ASSOCIE DIRECTEMENT A UN THERMOPLASTIQUE**
MEHRSCHICHTIGER GEGENSTAND AUS EINEM MIT EINEM THERMOPLASTISCHEN MATERIAL UNMITTELBAR VERBUNDENEN, VULKANISIERTEN ELASTOMER
MULTILAYER ARTICLE INCLUDING A VULCANISED ELASTOMER DIRECTLY COMBINED WITH A THERMOPLASTIC

(30) Priorité: 13.12.1993 FR 9314922
(43) Date de publication de la demande: 29.11.1995
(73) Titulaire: ELF ATOCHEM S.A., 92091 Paris Cédex 42 (FR)
(72) Inventeur: CERF, Martine, F-27300 Bernay (FR); DENIZART, Olivier, F-27180 Cauge (FR); DOUSSON, Christian, F-27300 Bernay (FR)
(74) Mandataire: Neel, Henry
(86) Numéro de dépôt international: FR9401454
(87) Numéro de publication internationale: WO9516564

(56) Documents cités:
- EP-A- 0 294 181
- EP-A- 0 303 244
- EP-A- 0 344 427
- EP-A- 0 607 085
- DE-A- 3 439 312
- US-A- 4 121 963

## Description

La présente invention concerne un article tubulaire multicouche comprenant une couche d'élastomère surmoulé sur un thermoplastique et vulcanisé de façon à adhérer directement sur ce dernier.

Elle concerne également un procédé de préparation d'un article composite comprenant un élastomère vulcanisé associé directement à un thermoplastique.

Dans le cas où le thermoplastique possède des propriétés barrières aux carburants ou aux fluides calorifiques, une bicouche peut être suffisante pour l'application de l'invention sous forme de tuyaux pour l'essence ou l'air conditionné. Dans le cas où le thermoplastique ne possède pas de propriétés barrière en soi, on aura besoin, pour le même but, d'une (ou plusieurs) couche(s) à l'intérieur, afin d'assurer l'imperméabilité.

Les procédés d'assemblage d'articles, (tubulaires ou plaques) d'élastomère vulcanisé (synthétique ou naturel) associé à des thermoplastiques couramment utilisés sont basés sur l'extrusion-gainage d'un thermoplastique préalablement adhésivé avec une colle. La couche externe d'élastomère est ensuite vulcanisée dans un autoclave à air chaud, à pression de vapeur, à rayonnement, usuels dans l'industrie du caoutchouc.

Néanmoins, une importante économie au niveau du procédé pourrait être réalisée en supprimant l'application de l'adhésif.

Un des objets de la présente invention est de proposer un procédé de préparation d'article composite tel que défini ci-dessus, évitant l'application adhésif.

Un autre objet de la présente invention est de proposer un article tel que défini ci-dessus présentant une force de pelage élevée de la gaine d'élastomère vulcanisé lors de la sollicitation à la séparation, de préférence supérieure à 2 daN/cm.

Les problèmes que l'invention entend résoudre sont les suivants :
- l'adhésion interfaciale pour des articles multicouches (dans le cas des articles tubulaires, notamment entre la couche elastomérique extérieure et la couche thermoplastique interne),

La protection de tubes thermoplastiques des points chauds par un élastomère vulcanisé, exemple d'application dans le secteur automobile.
- Pour l'application air conditionné, les tuyaux sont traditionnellement en caoutchouc renforcé textile. Avec les nouvelles législations, doit être incorporé une couche barrière aux hydrocarbures fluorés, ce que l'on réalise avec un thermoplastique barrière. Cette couche thermoplastique barrière doit être fine pour ne pas altérer les propriétés d'amortissement acoustique du caoutchouc.
- Pour l'application tube essence, ces tubes sont aujourd'hui en caoutchouc renforcé texte. Les problèmes liés au caoutchouc sont : la perméabilité, le gonflement, la résistance limitée au carburant peroxydé, l'extraction de produits divers, d'où l'intérêt d'introduire une couche interne barrière thermoplastique.

L'intérêt de l'adhésion interfaciale est liée entre autre aux meilleures propriétés des tubes (flexibilité, diminution du croquage des tubes et tenue au choc), une mise en oeuvre plus facile lors de fixation de raccords que sur un tube constitué de deux parties distinctes (une enveloppe caoutchouc et un liner thermoplastique).

D'autres avantages liés à la mise en oeuvre de la présente invention apparaîtront au cours de la description ci-après.

La demande de brevet japonaise JP5-44874 décrit des tuyaux à couche externe en caoutchouc épichlorhydrine et couche interne en Nylon ou en résine fluorée, mais avec emploi d'adhésif.

Dans les demandes de brevets DE 4 232 946 et GB 2 023 626 on a également recours à un promoteur d'adhésion ou à un adhésif, pour des tuyaux en polyamide (ou polymère fluoré, dans la première) recouverts de caoutchouc.

Le brevet français FR 2 660 404 décrit des tuyaux produits par coextrusion directe d'un élastomère vulcanisable sur une polyoléfine ; l'élastomère vulcanisable est choisi parmi les caoutchoucs Nitrile-PVC ou EPDM, et rien n'est dit à propos de la vulcanisation, ni du mécanisme qui permet l'adhérence.

La demande allemande DE 3 914 011 décrit un tuyau comprenant une couche externe d'élastomère polyoléfine (dépourvu de fonctions carboxyliques ou autres), et d'une couche interne de thermoplastique, par exemple polyamide, mais on admet qu'il serait préférable d'employer de l'adhésif entre les deux couches -ce qui est décrit d'ailleurs explicitement dans une demande postérieure DE 4 026 161.

La demande DE 3 439 312 décrit un tuyau dont la couche intérieure est une matrice en polyamide contenant un caoutchouc vulcanisé en phase dispersée.

La couche extérieure est une polyoléfine contenant des fonctions carboxyliques, epoxy ou amino.

On effectue d'abord le mélange du polyamide, du caoutchouc non vulcanisé et d'un vulcanisant puis on le coextrude avec la polyoléfine fonctionnalisée pour former le tuyau à deux couches.

La demande EP 607 085 ayant une priorité antérieure à la présente invention mais publiée après son dépôt décrit le surmoulage de caoutchoucs fonctionnalisés sur des élastomères thermoplastiques à séquences polyamides, puis la vulcanisation du caoutchouc assure son adhésion à l'élastomère thermoplastique.

Les élastomères synthétiques ou naturels vulcanisés convenant pour la mise en oeuvre de la présente invention sont bien connus de l'homme de métier, le terme élastomère dans la définition de la présente invention signifiant que celui-ci peut être constitué de mélanges de plusieurs élastomères.

Ces élastomères ou mélanges d'élastomères présentent une déformation rémanente à la compression (D.R.C.) à 100° C inférieure à 50 % généralement entre 5 et 40 % et de préférence inférieure à 30 %. Ces élastomères vulcanisés proviennent des élastomères vulcanisables correspondants.

Parmi ceux-ci, on peut citer le caoutchouc naturel, le polyisoprène ayant un taux élevé de double liaison en position cis, une émulsion polymérisée à base de copolymère styrène/butadiène, un polybutadiène ayant un taux élevé de double liaison en position cis obtenu par catalyse au nickel, cobalt, titane ou néodynium, un terpolymère éthylène halogéné/propylène/diène, un caoutchouc butyle halogéné, un copolymère acrylonitrile/butadiène, un élastomère acrylique, un élastomère fluoré, un élastomère epichlorydrine et le chloroprène.

Certains élastomères mentionnés ci-dessus peuvent être fonctionnalisés par des groupes carboxyliques (ou anhydrides), epoxy ou amino, par greffage, de façon connue, de ces élastomères, où pour des mélanges d'élastomères, par exemple avec des élastomères acryliques.

Parmi les élastomères mentionnés ci-dessus, on choisira avantageusement ceux compris dans le groupe suivant : les élastomères nitriles carboxylés, les élastomères acryliques, les polybutadiènes carboxylés, les terpolymères éthylène/propylène/diène greffés, les élastomères épichlorydrines ou les mélanges de ces polymères avec les mêmes élastomères mais non greffés comme les caoutchoucs nitriles, nitriles hydrogénés, les polybutadiènes, les terpolymères éthylène/propylène/diène, seuls ou en mélange.

Le thermoplastique peut être choisi parmi les polyamides, les polyamides 6, 66, 11, 12 et de préférence les polyamides 11 et 12 (plastifiés ou non) ou leurs copolymères ou des alliages de ces polyamides avec des polyoléfines, parmi le polyester (par exemple polybutylènetéréphtalate), les copolymères éthylène/tetrafluoroéthylène (ETFE), les copolymères à motifs éthylène/alcool vinylique et le polyfluorure de vinylidène (PVDF) ou mélanges le contenant.

Sous le terme polyfluorure de vinylidène on comprend l'homopolymère ou les copolymères possédant au moins 70 % en poids de fluorure de vinylidène. Le polyfluorure de vinylidène peut également être mélangé à un autre polymère thermoplastique à condition qu'au moins 50 % en poids de polyfluorure de vinylidène soit présent dans le mélange.

Un exemple important de mélange contenant du polyfluorure de vinylidène est la composition décrite dans la demande européenne EP 450 994 : un polymétracrylate plus un additif constitué de PVDF et d'un élastomère acrylique ou méthacrylique.

L'objet de l'invention comprend donc une couche de caoutchouc adhérent sur un thermoplastique, mais il peut comprendre aussi une ou plusieurs autres couches éventuellement fixée par un liant on a donc : caoutchouc vulcanisé / thermoplastique / autres couches avec ou sans lien, par exemple :
PA12 / Liant / PA6 / EVOH / PA6 ou PA12 / Liant / PVDF / PA12 / PBT/ PA12.

L'invention est particulièrement utile pour gainer des tubes ayant pour couche extérieure l'un des thermoplastiques cités ci-dessus : polyamides et leurs alliages, polyesters, etc.

L'invention a également pour objet un procédé de préparation des articles composites décrits précédemment, caractérisé en ce qu'un thermoplastique est surmoulé, à une température appropriée, d'une composition elastomérique comportant un élastomère synthétique ou naturel contenant éventuellement des fonctions carboxyliques (ou anhydrides de diacides carboxyliques), epoxy ou amino, un système de réticulation et éventuellement divers adjuvants et charges, et en ce que la couche de composition elastomérique obtenue est vulcanisée.

La température de vulcanisation est de préférence comprise entre -5°C et +30°C par rapport au point Vicat dudit thermoplastique en contact avec l'élastomère.

La composition elastomérique et sa cinétique de vulcanisation sont telles que la durée du cycle de vulcanisation ne dépasse pas 15 minutes et que l'article composite présente une force de pelage élevée de la couche d'élastomère vulcanisé (de préférence supérieure à 2 daN/cm).

Les élastomères vulcanisés et thermoplastiques formant le matériau composite sont normalement associés de façon suffisamment forte pour empêcher toute séparation lors d'un effort normal, compte tenu de l'utilisation souhaitée. Ainsi, au sens du présent texte, le terme séparation sous-entend l'application au matériau d'une force considérablement plus élevée que celle à laquelle ledit matériau doit être normalement soumis.

La résistance à la séparation est appréciée par un test de pelage sur une lanière de tube de moins de 5 mm de largeur découpé selon une génératrice. De préférence, la résistance au pelage sera avantageusement supérieure à 2 daN/cm.

Dans le cas d'un élastomère insaturé carboxylé, la vulcanisation du caoutchouc ayant lieu grâce aux doubles liaisons et aux groupes carboxyliques, il faut éviter que ces derniers, plus réactifs, soient tous consommés pour la réticulation, alors qu'ils sont nécessaires à l'adhésion avec le thermoplastique. C'est pour cela qu'il faut bien contrôler la température de vulcanisation pour avoir un temps de grillage suffisamment long, et laisser ainsi le temps aux groupes carboxyliques encore libres, de réagir avec le thermoplastique.

Selon une variante du procédé, la couche thermoplastique est surmoulée par la composition elastomérique qui est extrudée sur une extrudeuse d'élastomère à une température comprise entre 50°C et 120°C, dans une filière de gainage (c'est-à-dire en tête d'équerre). L'article non vulcanisé est placé, après découpage éventuel, dans un autoclave de vulcanisation usuel de caoutchouc (notamment à air chaud, à vapeur, à infrarouge, etc.) dont la température est comprise entre -5°C et +30°C par rapport au point Vicat dudit thermoplastique en contact avec l'élastomère.

Selon une autre variante du procédé, l'article est obtenu par coextrusion de l'élastomère en même temps que le ou les thermoplastique(s). Dans ce cas, l'adhésion produite lors du procédé de coextrusion et l'opération de vulcanisation sont effectuées en ligne ou en reprise.

Les systèmes de vulcanisation utilisés pour réaliser ces composites sont bien connus de l'homme du métier et en conséquence, l'invention n'est pas limitée à un type particulier de systèmes. Il suffit que celui-ci réponde au critère concernant la cinétique de vulcanisation définie dans la définition de l'invention indiquée précédemment.

Lorsque l'élastomère est à base de monomère insaturé (butadiène, isoprène, vinylidène-norbornène...) on peut citer quatre types de systèmes de vulcanisation :
- Systèmes au soufre constitués de soufre associé aux accélérateurs usuels tels que les sels métalliques de dithiocarbarnates (diméthyl dithiocarbamate de zinc, de tellure, etc.), les disulfures de thiurame (tétraméthyl disulfure de thiurame, etc.), les sulféramides, etc.

Ces systèmes peuvent contenir également de l'oxyde de zinc associé à de l'acide stéarique
- Systèmes donneurs de soufre dans lesquels la majorité du soufre utilisée pour les pontages, provient de molécules soufrées telles que les composés organosoufrés cités plus haut.
- Systèmes aux résines phénoliques constitués de résines formophénoliques difonctionnelles pouvant être halogénées associées à des accélérateurs tels que le chlorure stanneux, l'oxyde de zinc.
- Systèmes aux peroxydes. lis permettent d'avoir un produit plus stable à la chaleur, blanc, comme dans le cas des systèmes donneurs de soufre. Tous les donneurs de radicaux libres peuvent être utilisés (peroxydes de dicumyle, etc.) en association avec l'oxyde de zinc et l'acide stéarique.

Lorsque l'élastomère est acrylique (polyacrylate de butyle avec fonctions acides ou epoxy ou toute autre fonction réactive permettant la réticulation) on utilise les réticulants habituels à base de diamines (orthotoluidyl guanidine, diphénylguanidine, etc.) ou de diamines bloquées (carbamate d'hexaméthylène diamine etc.).

Lorsque l'élastomère est l'élastomère epichlorydrine (homopolymère copolymère ou terpolymère), on utilise les réticulants à base d'amine (2-mercapto imidazoline, triazines, etc.).

Les compositions elastomériques peuvent être modifiées pour certaines propriétés particulières (amélioration des propriétés mécaniques par exemple) par l'addition de charges telles que le noir de carbone, la silice, le kaolin, l'argile, le talc, la craie, etc. Ces charges peuvent être traitées en surface par des silanes, des polyéthylène glycols ou toute autre molécule de couplage. En général, le taux de charges en parties en poids est compris entre 5 et 100 pour 100 parties d'élastomères.

En outre, les compositions peuvent être assouplies par des plastifiants tels que les huiles minérales dérivées du pétrole, les esters de l'acide phtalique ou de l'acide sébacique, les plastifiants polymères liquides tels que le polybutadiène de faible masse éventuellement carboxylé, et d'autres plastifiants bien connus de l'homme du métier.

Les combinaisons d'agent de vulcanisation utilisées pour mettre en oeuvre le procédé sont telles qu'elles doivent permettre une réticulation complète de l'élastomère selon une cinétique conduisant à de bonnes propriétés de résistances à la séparation, telles que mentionnées dans la définition de l'invention et en général, à de bonnes propriétés caoutchoutiques (mesurées par une déformation rémanente à la compression à 100°C, des propriétés dynamométriques en traction, etc.).

La température de vulcanisation dans l'autoclave sera avantageusement comprise entre 130 et 190°C.

Avantageusement, la cinétique mesurée à l'aide d'un rhéomètre oscillant sera telle que le temps caractéristique de vulcanisation à 90 %, t₉₀, ne dépasse pas 15 minutes à 160°C et avantageusement sera compris entre 5 et 10 minutes.

Par ailleurs, il a été trouvé que le temps de démarrage de vulcanisation (ou temps de prise) correspondant à une augmentation de couple de 0,2 N.m était un facteur important pour obtenir des matériaux présentant de bonnes performances. Ainsi, il est avantageux que l'augmentation de couple précité soit atteinte dans un temps supérieur ou égal à 4 minutes à la température de moulage et de préférence entre 4 et 6 minutes.

### EXEMPLES

La perméabilité à l'essence des tubes a été mesurée par une méthode statique à 23°C avec du fuel C contenant 15 % de méthanol (méthode en statique),

### Exemple 1 comparatif

Une composition réalisée en mélangeur interne comprenant en parties en poids :

| | |
|---|---|
| Elastomère nitrile carboxylé Chemigum NX 775 (RCG 7343 Elastomère, trade name de Goodyear) | 70 |
| PVC SK 70 | 30 |
| Huile de soja epoxydé | 1,5 |
| Octyl d'étain 17 MOK | 0,3 |
| Stéarate de zinc | 0,3 |
| DOP ( Dioctylphtalate) | 25 |
| Wingstay 29 (Antioxydant, 4,4-bis-2,2-diméthylbenzyl diphényl amine de Goodyear) | 1 |
| Polyvest C 70 (Polybutadiène carboxylé de HÜLS) | 4 |
| Silice VN 3 (DEGUSSA FRANCE) | 20 |
| Silice KS 300 (AKZO) | 10 |
| PEG 4000 (Polyéthylèneglycol de HÜLS) | 3 |
| Silane A 1100 (UNION CARBIDE) | 1 |
| TiO₂ | 10 |

Cette composition a été mélangée sur cylindre à un système de vulcanisation de composition :

| | |
|---|---|
| Soufre | 1 |
| Vulkacit J (Disulfure de N, N'-diméthyl-N, N'- diphénylthiurame de BAYER) | 2 |
| MBS ((2-morpholino thio) Benzothiazole) | 2 |
| Vulkalent E (Sulfonamide de BAYER) | 1 |
| Acide stéarique | 1 |
| ZnO | 5 |

Elle a été extrudée sur une extrudeuse d'élastomère en tube de 6/10 mm puis vulcanisée à 160°C pendant 10 minutes.

La perméabilité à l'essence de cet article tubulaire était de 850 g/m² x 24 heures ; on a constaté l'absence de marquage de l'article tubulaire lorsqu'on le plie et retour à sa forme initiale.

### Exemple 2 comparatif

Un tube extrudé de PA 12 Rilsan AESNTL a été réalisé en diamètre 6/8 mm. La perméabilité à l'essence de ce tube était de 80 g/m² x 24 heures pour 1 mm d'épaisseur. Lorsqu'on plie cet article tubulaire en dessous d'un certain rayon de courbure, il se produit un phénomène de croquage et le tube est marqué.

### Exemple 3

Le tube de l'exemple 2 a été repris sur une installation de gainage d'élastomère, extrudant la composition de l'exemple 1 à 90°C à travers une filière de gainage L'article tubulaire a été ensuite coupé, entringlé sur des tiges métalliques de 6 mm et placé dans une étuve à 170°C pendant 20 minutes. Ses dimensions transversales étaient de 6/10 mm après gainage. La perméabilité à l'essence de ce tube est de 80 g/m² x 24 heures (valeur statique). Cet article tubulaire peut être plié à un rayon de courbure beaucoup plus faible que le tube de l'exemple 2 et ne conserve aucune marque de pliure.

### Exemple 4 comparatif

Un tube extrudé de PA 11 Rilsan BESNTL a été réalisé en diamètre 6/8 mm. La perméabilité de ce tube est de 40 g/m² x 24 heures. Lorsqu'on plie ce tube en dessous d'un certain rayon de courbure, il se produit un phénomène de croquage et le tube est marqué.

### Exemple 5

Le tube de l'exemple 4 a été repris sur une installation de gainage d'élastomère, extrudant la composition de l'exemple 1 à 90°C à travers une filière de gainage. L'article tubulaire est ensuite coupé, entringlé sur des tiges métalliques de 6 mm, a été placé dans une étuve à 180°C pendant 20 minutes. Ses dimensions transversales étaient de 6/10 mm après gainage. La perméabilité à l'essence de ce tube est de 40g/m2 × 24 heures. Cet article tubulaire peut être plié à un rayon de courbure beaucoup plus faible que le tube de l'exemple 4 et ne conserve aucune marque de pliure.

### Exemple 6

Une composition réalisée en mélangeur interne comprenant en parties en poids :

| | |
|---|---|
| Hydrin 2000 (Copolymère de l'épichlorhydrine avec l'oxyde d'éthylène, R.M. de ZEON CHEMICALS) | 100 |
| acide stéarique | 1 |
| noir de carbone FEF N550 | 30 |
| Extrusil (silice de DEGUSSA FRANCE) | 20 |
| MgO | 3 |
| CaCO₃ | 5 |
| Cette composition a été mélangée sur cylindre avec 1 part de ZISNET F (Triazine de ZEON CHEMICAL). | |

Par ailleurs un tube coextrudé de PA 12 Rilsan AESNTL et un Adhéflon® (de composition : 90 % TPU/10 % PVDF, appelé par la suite DHP1) réalisé en diamètre 6/8 mm, avec une couche externe de DHP1 de 0.2 mm. La perméabilité à l'essence de cet article tubulaire est de 80 g/m² × 24 heures. Lorsqu'on plie ce tube en dessous d'un certain rayon de courbure, il se produit un phénomène de croquage et le tube est marqué.

Le tube précédent a été repris sur une installation de gainage d'élastomère, extrudant la composition précisée précédemment à base d'Hydrin à 90°C à travers une filière de gainage. L'article tubulaire a été ensuite coupé, entringlé sur des tiges métalliques de 6 mm et placé dans une étuve à 170°C pendant 20 minutes. Ses dimensions transversales étaient de 6/10 mm après gainage. La perméabilité à l'essence de ce tube est de 80g/m² × 24 heures. Cet article tubulaire peut être plié à un rayon de courbure beaucoup plus faible que le tube bicouche Rilsan 12/DHP1 et ne conserve aucune marque de pure.

### Exemple 7

Un tube coextrudé de PA 11 Rilsan BESNTL et un Adhéflon® (de composition : 35 % de PMMA modifié vendu par ROHM et HAAS sous la référence PARALOID EXL 4151 / 30 % de PVDF / 35 % d'élastomère acrylique type core/shell à coeur butadiène styrène vendu par ROHM et HAAS sous la référence EXL 3361), appelé par la suite DHP2, a été réalisé en diamètre 6/8 mm, avec une couche externe de DHP2 de 0.2 mm. La perméabilité à l'essence de cet article tubulaire était de 40 g/m² × 24 heures. Lorsqu'on plie ce tube en dessous d'un certain rayon de courbure, il se produit un phénomène de croquage et le tube est marqué.

Le tube précédent a été repris sur une installation de gainage d'élastomère, extrudant la composition à base d'Hydrin précisée dans l'exemple 6 à 90°C à travers une filière de gainage. L'article tubulaire a été ensuite coupé, entringlé sur des tiges métalliques de 6 mm et placé dans une étuve à 170°C pendant 20 minutes. Ses dimensions transversales étaient de 6/10 mm après gainage. La perméabilité à l'essence de ce tube était de 40g/m² × 24 heures. Cet article tubulaire peut être plié à un rayon de courbure beaucoup plus faible que le tube bicouche Rilsan 11/DHP2 et ne conserve aucune marque de pliure.

### Exemple 8 :

Un tube coextrudé de PVDF et un Adhéflon® (DHP2) a été réalisé en diamètre 6/7 mm, avec une couche externe de DHP2 de 0.2 mm. La perméabilité à l'essence de cet article tubulaire est de 10g/m² × 24 heures.

Le tube précédent a été repris sur une installation de gainage d'élastomère, extrudant la composition à base d'Hydrin précisée dans l'exemple 6 à 90°C à travers une filière de gainage. L'article tubulaire a été ensuite coupé, entringlé sur des tiges métalliques de 6 mm et placé dans une étuve à 170°C pendant 20 minutes. Ses dimensions transversales étaient de 6/8 mm après gainage. La perméabilité à l'essence de ce tube était de 10g/m² × 24 heures.

### Exemple 9

Un tube coextrudé de PA 11 Rilsan BESNTL et un Adhéflon® (DHP1) a été réalisé en diamètre 6/8 mm, avec une couche externe de DHP1 de 0.2 mm. La perméabilité à l'essence de cet article tubulaire était de 40 g/m² × 24 heures. Lorsqu'on plie ce tube en dessous d'un certain rayon de courbure, il se produit un phénomène de croquage et le tube est marqué.

Le tube précédent a été repris sur une installation de gainage d'élastomère, extrudant la composition à base de caoutchouc nitrile carboxylé XNBR précisée dans l'exemple 1 à 90°C à travers une filière de gainage. L'article tubulaire a été ensuite coupé, entringlé sur des tiges métalliques de 6 mm et placé dans une étuve à 160°C pendant 20 minutes. Ses dimensions transversales étaient de 6/10 mm après gainage. La perméabilité à l'essence de ce tube était de 40g/m² × 24 heures. Cet article tubulaire peut être plié à un rayon de courbure beaucoup plus faible que le tube bicouche Rilsan 11/DHP1 et ne conserve aucune marque de pliure.

### Exemple 10

Un tube multicouche coextrudé de PVDF 1000 HD, un Adhéflon® (DHP2), un PA 12 RILSAN AESNTL et une autre couche d'Adhéflon DHP2 a été réalisé en diamètre 6/8 mm, avec une couche interne PVDF de 0.15 mm, une couche intermédiaire DHP2 de 0.15 mm et une couche externe DHP2 de 0.15 mm. La perméabilité à l'essence de cet article tubulaire est de 10 g/m² × 24 heures.

Le tube précédent a été repris sur une installation de gainage d'élastomère, extrudant la composition à base de Hydrin précisée dans l'exemple 6 à 90°C à travers une filière de gainage. L'article tubulaire a été ensuite coupé, entringlé sur des tiges métalliques de 6 mm et placé dans une étuve à 160°C pendant 20 minutes. Ses dimensions transversales étaient de 6/10 mm après gainage. La perméabilité à l'essence de ce tube est de 10g/m² × 24 heures.

## Revendications

1. Article tubulaire composite formé d'une gaine externe d'un
- élastomère surmoulé et vulcanisé sur un thermoplastique,
- l'élastomère adhérant en lui-même sur le thermoplastique,
- le thermoplastique étant choisi parmi les polyamides, les polyesters, le polyfluorure de vinylidène ou les mélanges le contenant, les copolymères éthylène / tetrafluoroéthylène, les copolymères à motifs éthylène / alcool vinylique à l'exclusion des élastomères thermoplastiques à séquences polyamide.

2. Article selon la revendication 1, caractérisé en ce que l'élastomère est un élastomère épichlorydrine ou est fonctionnalisé avec des groupes carboxyliques, epoxy ou amino.

3. Article selon la revendication 1 ou 2, caractérisé en ce que le mélange contenant du polyfluorure de vinylidène comprend aussi du polyméthacrylate et de l'élastomère.

4. Procédé de préparation de l'article selon la revendication 1, caractérisé en ce que le thermoplastique est surmoulé, par extrusion à une température appropriée, d'une couche élastomérique comprenant un élastomère synthétique ou naturel à fonctions carboxyliques, epoxy ou amino, un élastomère épichlorhydrine ou des mélanges d'élastomères et un système de réticulation, et en ce que la couche de composition élastomérique est vulcanisée.

5. Procédé de préparation de l'article selon la revendication 1 caractérisé en ce que le thermoplastique est coextrudé avec l'élastomère contenant un système de réticulation et en ce que la couche de composition élastomérique est vulcanisée.

6. Procédé selon la revendication 4 ou 5, caractérisé en ce que la vulcanisation peut avoir lieu pendant le surmoulage ou après.

7. Article selon l'une quelconque des revendications 1 à 3, caractérisé en ce que la face interne du tube thermoplastique peut être revêtue d'une couche interne d'imperméabilisation ou de protection ayant des propriétés barrière notamment à l'encontre des liquides tels que les carburants ou les fluides calorifiques.

## Claims

1. Composite tubular article formed of an outer sheath of an
- elastomer overmoulded and vulcanized on a thermoplastic,
- the elastomer adhering inherently to the thermoplastic,
- the thermoplastic being selected from polyamides, polyesters, polyvinylidene fluoride or mixtures comprising it, ethylene/tetrafluoroethylene copolymers and copolymers having ethylene/vinyl alcohol units, with the exception of thermoplastic elastomers having polyamide sequences.

2. Article according to Claim 1, characterized in that the elastomer is an epichlorohydrin elastomer or is functionalized with carboxylic, epoxy or amino groups.

3. Article according to Claim 1 or 2, characterized in that the mixture containing polyvinylidene fluoride also includes polymethacrylate and elastomer.

4. Process for the preparation of the article according to Claim 1, characterized in that the thermoplastic is overmoulded, by extrusion at an appropriate temperature, with an elastomeric layer including a synthetic or natural elastomer containing carboxylic, epoxy or amino functional groups, an epichlorohydrin elastomer or mixtures of elastomers and a crosslinking system, and in that the layer of elastomeric composition is vulcanized.

5. Process for the preparation of the article according to Claim 1, characterized in that the thermoplastic is coextruded with the elastomer containing a crosslinking system and in that the layer of elastomeric composition is vulcanized.

6. Process according to Claim 4 or 5, characterized in that the vulcanization may take place during the over-moulding or afterwards.

7. Article according to any one of Claims 1 to 3, characterized in that the inner face of the thermoplastic tube may be coated with an inner layer for producing imperviousness or for protection which has barrier properties especially against liquids such as fuels or heating fluids.

## Patentansprüche

1. Röhrenförmiger Gegenstand aus Verbundmaterial, der besteht aus einem äußeren Mantel
- aus einem auf ein thermoplastisches Material aufgeformten und vulkanisierten Elastomer,
- wobei das Elastomer als solches auf dem thermoplastischen Material haftet und
- wobei das thermoplastische Material unter Polyamiden, Polyestern, Polyvinylidenfluorid sowie Polyvinylidenfluorid enthaltenden Gemischen, EthylenTetrafluorethylen-Copolymeren und Copolymeren mit Ethylen- und Vinylakohol-Einheiten unter Ausschluß von thermoplastischen Elastomeren mit Polyamid-Sequenzen ausgewählt ist.

2. Gegenstand nach Anspruch 1, dadurch gekennzeichnet, daß das Elastomer ein Epichlorhydrin-Elastomer oder ein mit Carboxy-, Epoxy- oder Aminogruppen funktionalisiertes Elastomer ist.

3. Gegenstand nach Anspruch 1 oder 2, dadurch gekennzeichnet, daß das Polyvinylidenfluorid enthaltende Gemisch auch ein Polymethacrylat und Elastomer enthält.

4. Verfahren zur Herstellung des Gegenstands nach Anspruch 1, dadurch gekennzeichnet, daß
- das thermoplastische Material durch Extrusion bei einer geeigneten Temperatur mit einer Elastomerschicht überzogen wird, die ein synthetisches oder natürliches Elastomer mit Carboxy-, Epoxy- oder Aminofunktionen, ein Epichlorhydrin-Elastomer oder ein Elastomerengemisch und ein Vernetzungssytem enthält, und
- die Schicht aus der Elastomerzusammensetzung vulkanisiert wird.

5. Verfahren zur Herstellung des Gegenstands nach Anspruch 1, dadurch gekennzeichnet, daß das thermoplastische Material mit dem Elastomer, das ein Vernetzungssystem enthält, coextrudiert wird und die Schicht aus der Elastomerzusammensetzung vulkanisiert wird.

6. Verfahren nach Anspruch 4 oder 5, dadurch gekennzeichnet, daß die Vulkanisation während oder nach der Aufformung vorgenommen wird.

7. Gegenstand nach einem der Ansprüche 1 bis 3, dadurch gekennzeichnet, daß die Innenseite der thermoplastischen Röhre mit einer inneren Abdicht- oder Schutzschicht überzogen ist, die insbesondere gegenüber Flüssigkeiten, wie Treibstoffen oder zu Heizzwecken dienenden Flüssigkeiten, Barriereeigenschaften aufweist.
